# EUROPEAN PATENT APPLICATION

(11) **EP 4 835 514 A1**
(43) Date of publication of application: **04.11.2026**
(21) Application number: 25741497.9
(22) Date of filing: 14.01.2025
(51) Int. Cl.: G01S 7/481

(54) **RECEIVING ASSEMBLY AND LIDAR**

(30) Priority: 18.01.2024 CN 202410074100
(71) Applicant: Yinwang Intelligent Technologies Co., Ltd., Shenzhen, Guangdong 518110 (CN)
(72) Inventor: NIU, Ben, Shenzhen, Guangdong 518129 (CN); LI, Menglin, Shenzhen, Guangdong 518129 (CN); ZHANG, Huahong, Shenzhen, Guangdong 518129 (CN); LIU, Tonghui, Shenzhen, Guangdong 518129 (CN); LENG, Lemeng, Shenzhen, Guangdong 518129 (CN)
(74) Representative: Pfenning, Meinig & Partner mbB
(86) International application number: PCT/CN2025/072329
(87) International publication number: WO 2025/152936

(57) **Abstract**

This application discloses a receiving assembly and a lidar. The receiving assembly includes a scanning apparatus and at least one receiving channel. Each receiving channel includes at least one receiving waveguide and at least one grating coupler, the receiving waveguide corresponds one-to-one to the grating coupler, and the grating coupler is configured to couple, into a receiving waveguide corresponding to the grating coupler, received light reflected by the scanning apparatus. The grating coupler includes a first grating layer. The first grating layer includes a plurality of grating units arranged in a first direction, a duty cycle of each of the plurality of grating units is within a first range, a total length of the plurality of grating units in the first direction is greater than a first length, and the first direction corresponds to a scanning direction of the scanning apparatus. In the receiving assembly, the grating coupler is configured to couple the received light into the receiving waveguide, thereby improving receiving efficiency of the lidar, and reducing hardware costs and a product size of the lidar.

## Description

### CROSS-REFERENCE TO RELATED APPLICATIONS

This application claims priority to Chinese Patent Application No. 202410074100.2, filed with the China National Intellectual Property Administration on January 18, 2024 and entitled "RECEIVING ASSEMBLY AND LIDAR", which is incorporated herein by reference in its entirety.

### TECHNICAL FIELD

This application relates to the field of detection technologies, and in particular, to a receiving assembly and a lidar.

### BACKGROUND

In a lidar, an edge coupler (edge coupler, EC) is typically used to couple received light into a receiving waveguide.

To achieve a sufficient point rate, the lidar is typically equipped with one or more high-speed rotating scanning apparatuses. Emitted light is directed via the scanning apparatus, and received light is returned via the scanning apparatus. It takes time for laser light to be emitted, incident on a target, and reflected back to a receiver. During this time, the scanning apparatus has rotated through a specific angle, causing a deflection angle between the emitted light and the received light. This results in a transmit-receive asynchronism effect (also referred to as a walk-off effect). The offset received light deviates from an ideal receiving position on a receiving surface of the edge coupler, and may even fall outside the receiving surface of the edge coupler, leading to low receiving efficiency and poor detection performance of the lidar.

A method for counteracting the walk-off effect is to increase a quantity of waveguides in each receiving channel of the lidar to form a waveguide array, thereby enlarging an equivalent receiving surface of the entire receiver of the lidar. This enables the lidar to still detect optical signals even after the received light is offset. However, this method increases costs significantly, and imposes a heavy burden on processing of back-end hardware signals. Furthermore, this method can improve optical receiving efficiency at specific deflection angles only when an offset direction of the received light is parallel to an arrangement direction of a plurality of waveguides, whereas optical receiving efficiency at other deflection angles remains low. In addition, if the plurality of waveguides are combined into a single waveguide for receiving, an output optical power after the combination is much lower than an input optical power, resulting in poor overall optical receiving efficiency.

How to improve the receiving efficiency of a lidar while reducing hardware costs and a product size of the lidar remains a technical problem that needs to be urgently resolved.

### SUMMARY

This application provides a receiving assembly and a lidar, to improve receiving efficiency of the lidar and reduce hardware costs and a product size of the lidar.

According to a first aspect, a receiving assembly is provided, and may be used in a lidar, where the receiving assembly includes a scanning apparatus and at least one receiving channel; each of the at least one receiving channel includes at least one receiving waveguide and at least one grating coupler, the receiving waveguide corresponds one-to-one to the grating coupler, and each of the at least one grating coupler is configured to couple, into a receiving waveguide corresponding to the grating coupler, received light reflected by the scanning apparatus; and the grating coupler includes a first grating layer, the first grating layer includes a plurality of grating units arranged in a first direction, a duty cycle of each of the plurality of grating units is within a first range, a total length of the plurality of grating units in the first direction is greater than a first length, and the first direction corresponds to (for example, is parallel to) a scanning direction of the scanning apparatus.

In the receiving assembly provided in this embodiment of this application, the grating coupler is configured to couple the received light into the receiving waveguide, the duty cycle of each of the plurality of grating units in the first grating layer of the grating coupler is within the first range, and the total length of the plurality of grating units in the first direction is greater than the first length. In this way, a total length of a mode field (namely, a valid receiving plane) of the grating coupler in the first direction is greater than the first length, so that even after the received light is offset due to a transmit-receive asynchronism (walk-off) effect, the received light can be received by the grating coupler and then coupled into the receiving waveguide, thereby alleviating (or resolving) a problem of low receiving efficiency of the lidar caused by the walk-off effect.

In addition, in this embodiment of this application, because the mode field of the grating coupler is sufficiently large, one receiving channel may have as few as one receiving waveguide and one grating coupler, without the need for an additional optical rotating system. This can improve receiving efficiency of the lidar while reducing hardware costs and a product size of the lidar.

In addition, the grating coupler can be flexibly disposed. For example, the grating coupler may be disposed at any position in a lidar chip, which can minimize unnecessary waveguide crossings and reduce inter-waveguide crosstalk, thereby improving overall receiving performance of the lidar.

In a possible design, the first direction corresponds to (for example, is parallel to) an offset direction of the walk-off effect generated by the scanning apparatus.

Because the offset direction of the walk-off effect is caused by scanning of the scanning apparatus, the first direction corresponds to the scanning direction of the scanning apparatus, in other words, the first direction corresponds to the offset direction of the walk-off effect.

In a possible design, a grating period of each of the plurality of grating units is within a second range.

The grating period of the grating coupler is designed, so that the mode field of the grating coupler can be increased in the offset direction of the walk-off effect.

In a possible design, a length of a mode field of the grating coupler in the first direction is greater than the first length.

This can ensure that the offset received light is still projected onto the mode field of the grating coupler, to improve the receiving efficiency of the lidar.

In a possible design, the first length is related to a maximum offset corresponding to a walk-off effect generated by the scanning apparatus.

In this way, even when the walk-off effect is most severe, the offset received light is still projected onto the mode field of the grating coupler, to improve the receiving efficiency of the lidar.

In a possible design, the scanning apparatus is a one-dimensional scanning apparatus, and the first direction (or the offset direction of the walk-off effect generated by the scanning apparatus) corresponds to (for example, is parallel to) the scanning direction of the scanning apparatus; or the scanning apparatus is a two-dimensional scanning apparatus, and the first direction (or the offset direction of the walk-off effect generated by the scanning apparatus) corresponds to (for example, is parallel to) a scanning direction of a fast axis in the two-dimensional scanning apparatus.

This can alleviate (or resolve) the problem of low receiving efficiency of the lidar caused by the walk-off effect, regardless of whether the scanning apparatus is a one-dimensional scanning apparatus or a two-dimensional scanning apparatus.

In a possible design, a total length of the plurality of grating units in a second direction is less than the first length, and the second direction is perpendicular to the first direction.

In this way, the mode field of the first grating layer (or the grating coupler) may be increased in the offset direction of the walk-off effect, but may not be increased in the second direction (or an increment is small). For example, a length of the mode field of the grating coupler in the second direction is less than the first length, thereby minimizing a size of the grating coupler while improving the receiving efficiency of the first grating layer (or the grating coupler).

In a possible design, a total length of the plurality of grating units in a second direction is equal to the total length of the plurality of grating units in the first direction, and the second direction is perpendicular to the first direction.

In this way, the mode field of the first grating layer (or the grating coupler) may be increased in a plurality of directions (including the offset direction of the walk-off effect). For example, a length of the mode field of the grating coupler in the second direction is equal to the length of the mode field of the grating coupler in the first direction, thereby further improving receiving efficiency of the first grating layer (or the grating coupler).

In a possible design, a first grating unit in the plurality of grating units is offset relative to a center of the plurality of grating units, and a direction in which the first grating unit is offset relative to the center is the same as an offset direction of the walk-off effect generated by the scanning apparatus; and a duty cycle of the first grating unit is a first value, and a grating period of the first grating unit is a second value.

In this way, the mode field of the first grating layer (or the grating coupler) may be a mode field whose peak value is biased to one side, so that receiving efficiency of the first grating layer (or the grating coupler) for the offset received light can be improved.

In a possible design, an offset of the first grating unit relative to the center is related to the maximum offset corresponding to the walk-off effect generated by the scanning apparatus.

In this way, when the walk-off effect is most severe (that is, when the walk-off effect corresponds to the maximum offset), a position of the received light is exactly a peak position, and the first grating layer (or the grating coupler) achieves the highest receiving efficiency for the received light.

In a possible design, a first grating unit in the plurality of grating units is located in a center of the plurality of grating units, a duty cycle of the first grating unit is a first value, and a grating period of the first grating unit is a second value.

In this way, the mode field of the first grating layer (or the grating coupler) is a mode field whose peak value is in the center, so that receiving efficiency at a position of the pre-offset received light is higher.

In a possible design, coupling efficiency of the first grating unit is a maximum value among coupling efficiency values of the plurality of grating units.

In a possible design, the duty cycle of each of the plurality of grating units increases or decreases along a direction from the first grating unit to a second grating unit; or coupling efficiency of each of the plurality of grating units decreases along a direction from the first grating unit to a second grating unit; and the second grating unit is the 1^{st} grating unit or the last grating unit of the plurality of grating units in the first direction.

In this way, the mode field of the first grating layer (or the grating coupler) may be a Gaussian spot mode field or a Gaussian-like spot mode field. When a light spot of the received light is a Gaussian spot or a Gaussian-like spot, mode field distribution of the first grating layer (or the grating coupler) matches energy distribution of the light spot of the received light. This can further improve the receiving efficiency of the first grating layer (or the grating coupler).

In a possible design, the grating coupler further includes a second grating layer provided above or below the first grating layer.

This can further improve the receiving efficiency of the grating coupler.

In a possible design, the grating coupler further includes a reflection layer provided below the first grating layer, and the reflection layer is a distributed Bragg reflector (distributed Bragg reflector, DBR) layer or a metal layer.

This can further improve the receiving efficiency of the grating coupler.

According to a second aspect, a lidar is provided, including the receiving assembly according to the first aspect or any possible design of the first aspect.

Optionally, the lidar further includes an emitting assembly.

Optionally, the emitting assembly and the receiving assembly share the scanning apparatus.

Optionally, the emitting assembly includes an emitting waveguide and a grating coupler, a structure parameter of a grating layer in the grating coupler in the emitting assembly corresponds to a structure parameter of a grating layer in a grating coupler in the receiving assembly, and the structure parameter includes one or more of a shape, a size, a grating period, and a duty cycle.

According to a third aspect, a terminal is provided, including the receiving assembly according to the first aspect or any possible design of the first aspect, or including the lidar according to the second aspect or any possible design of the second aspect.

For specific designs and beneficial effects of the second aspect and the third aspect, refer to corresponding designs and beneficial effects of the first aspect.

### BRIEF DESCRIPTION OF DRAWINGS

FIG. 1A to FIG. 1D are diagrams of a walk-off effect;
FIG. 2 is a diagram of a lidar with a single-waveguide structure;
FIG. 3A and FIG. 3B are diagrams of a lidar with a multi-waveguide structure;
FIG. 4 is a diagram of a structure of a receiving assembly according to an embodiment of this application;
FIG. 5 is a diagram of a structure of a first grating layer 221 of a grating coupler 22 according to an embodiment of this application;
FIG. 6A to FIG. 6F are diagrams of a mode field of a grating coupler 22 (or a first grating layer 221) according to an embodiment of this application;
FIG. 6G is a diagram of a structure of a first grating layer 221 of a grating coupler 22 according to an embodiment of this application;
FIG. 7A to FIG. 7C are diagrams of a structure of a grating coupler 22 according to an embodiment of this application;
FIG. 8A to FIG. 8D are diagrams of a scanning apparatus 01 of a grating coupler 22 according to an embodiment of this application; and
FIG. 9 is a diagram of a structure of a lidar according to an embodiment of this application.

### DESCRIPTION OF EMBODIMENTS

The technical solutions provided in embodiments of this application may be applied to a device with a laser detection capability, for example, a lidar, or a terminal device with a laser detection capability. The terminal device may be an intelligent device with a laser detection capability, and includes but is not limited to a smart home device, for example, a television, a robotic vacuum cleaner, a smart lamp, a speaker system, an intelligent lighting system, an electric appliance control system, home background music, a home theater system, an intercom system, and video surveillance, an intelligent transportation device, for example, a vehicle, a ship, an uncrewed aerial vehicle, a train, a van, a wagon, and a truck, and an intelligent manufacturing device, for example, a robot, an industrial device, intelligent logistics, and an intelligent factory. Alternatively, the terminal device may be a computer device with a laser detection capability, for example, a desktop computer, a personal computer, or a server. It should be further understood that the terminal device may alternatively be a portable electronic device with a laser detection capability, for example, a mobile phone, a tablet computer, a palmtop computer, a headset, an acoustic device, a wearable device (for example, a smartwatch), an in-vehicle device, a virtual reality device, or an augmented reality device. The following uses a lidar as an example.

The lidar may be provided with one or more high-speed rotating scanning apparatuses to increase a point rate (the point rate is a total quantity of detection points obtained by the lidar per second). The scanning apparatus may be, for example, a rotating mirror, a micro-electro-mechanical system (micro-electro-mechanical system, MEMS) vibration mirror, or a Galvo scanning vibration mirror. In a lidar with a scanning apparatus, emitted light is emitted via the scanning apparatus, and received light is returned via the scanning apparatus. It takes a period of time for laser light to be emitted, incident on a target, and be reflected back to a receiver. During this time, the scanning apparatus has rotated through a specific angle, causing a deflection angle between the emitted light and the received light.

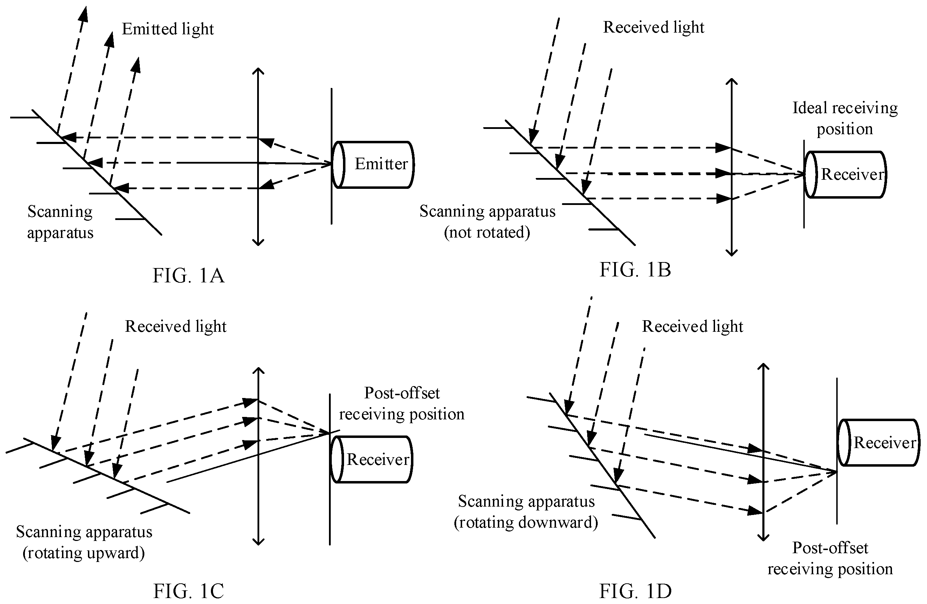

FIG. 1A shows a case in which emitted light is emitted via a scanning apparatus. FIG. 1B shows a case in which received light is received by a lidar via the scanning apparatus when the scanning apparatus does not rotate. FIG. 1C and FIG. 1D show a case in which received light is received by a lidar via the scanning apparatus when the scanning apparatus rotates. It may be understood that an optical path for emitted light and an optical path for received light may be coaxial, or may be non-coaxial. When an optical path for emitted light and an optical path for received light are coaxial, an emitter and a receiver may be integrated in one assembly. When an optical path for emitted light and an optical path for received light are non-coaxial, an emitter and a receiver may be implemented using two separate assemblies. This is not limited in embodiments of this application.

It can be seen from FIG. 1A to FIG. 1D that, when the scanning apparatus rotates, a receiving focus of the focused received light on a receiving plane deviates from an ideal receiving position (namely, a position at which the received light is received by the receiver), which reduces receiving efficiency. The phenomenon that a deflection angle exists between the emitted light and the received light due to rotation of the scanning apparatus may be referred to as a transmit-receive asynchronism effect, or may be referred to as a walk-off effect, a descan effect, or another name.

For a pulsed time-of-flight (time-of-flight, TOF) lidar, a receiver is generally an assembly with a large photosensitive surface (on the order of 100 µm), for example, an avalanche photodiode (Avalanche PhotoDiode, APD), a single photon avalanche diode (Single Photon Avalanche Diode, SPAD), or a silicon photomultiplier (Silicon Photomultiplier, SiPM). Therefore, even though the received light is offset due to the walk-off effect, the offset received light remains within the range of the receiving plane of the receiver, thereby barely affecting receiving efficiency of the ToF lidar.

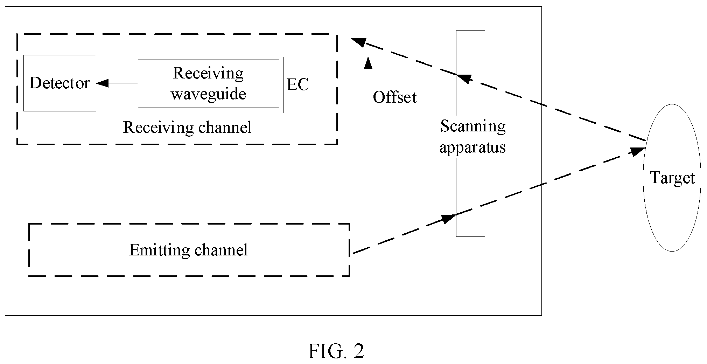

However, for a lidar with a waveguide structure, for example, a frequency modulated continuous wave (frequency modulated continuous waveform, FMCW) lidar, as shown in FIG. 2, a receiver of the lidar is a structure of an edge coupler (edge coupler, EC) and a receiving waveguide (a waveguide used to receive light is referred to as a receiving waveguide), and the EC couples the received light into the receiving waveguide. For the receiver that includes the EC and the receiving waveguide structure, a size of a receiving surface of the receiver is limited (on the order of µm), and receiving efficiency is sensitive to a position of a focused light spot of the received light. Therefore, a positional offset of the received light caused by the walk-off effect leads to a decrease in receiving efficiency. In addition, a longer distance between the lidar and a target indicates a higher angular velocity of the scanning apparatus, a more significant walk-off effect, and lower receiving efficiency of the lidar. It may be understood that FIG. 2 shows only one receiving channel. In an actual application, there may be a plurality of receiving channels. FIG. 2 mainly describes the following content: The walk-off effect causes an offset of a receiving position of the received light. As a result, the received light cannot enter the receiving channel accurately. Transmission directions of the emitted light and the received light are simplified, and actual transmission directions of the emitted light and the received light may be changed.

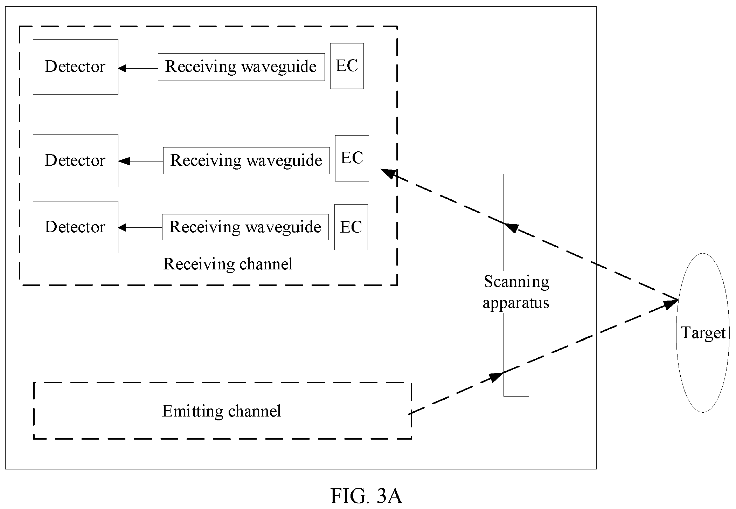

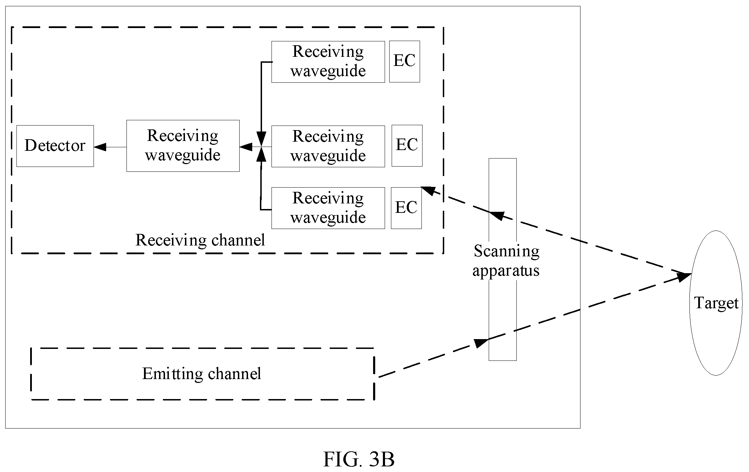

A solution for mitigating the walk-off effect of the FMCW lidar is to increase a quantity of waveguides in each receiving channel. As shown in FIG. 3A and FIG. 3B, a waveguide array is formed to improve an equivalent receiving plane of an entire receiver, so that the lidar may still detect an optical signal after a walk-off angle offset is generated for received light. In FIG. 3A, an example in which a plurality of receiving waveguides in one receiving channel correspond to a plurality of detectors is used. In FIG. 3B, an example in which a plurality of receiving waveguides are combined into one waveguide and then correspond to one detector is used. FIG. 3A and FIG. 3B are merely examples of some multi-waveguide solutions. In an actual application, there may be another multi-waveguide implementation.

However, a prerequisite for using this multi-waveguide receiving solution is that an offset direction generated by a walk-off effect is parallel to a direction of the waveguide array. If the walk-off offset direction of the lidar is not parallel to the direction of the waveguide array, an additional optical rotating system is needed to rotate the walk-off offset direction to a direction parallel to the direction of the waveguide array. This increases device complexity of the lidar, increases light tuning time and costs, and reduces reliability. In addition, in the multi-waveguide receiving solution, quantities and costs of devices such as a frequency mixer, a photodetector (photodetector, PD), a trans-impedance amplifier (trans-impedance amplifier, TIA), and an analog-to-digital converter (analog-to-digital converter, ADC) also increase by multiple times, thereby increasing the quantity, complexity, size, and costs of the devices. In addition, even if the multi-waveguide receiving solution is used, only a plurality of specific discrete walk-off offset angles can be mitigated, and overall receiving efficiency of the lidar remains low. If N waveguides are combined into a single waveguide for receiving (as shown in FIG. 3B), output optical power after the combination is far less than input optical power. For example, the output optical power after the combination is 1/N of the input optical power, and overall optical receiving efficiency is low.

To resolve the foregoing one or more problems, a technical solution in an embodiment of this application is provided, to alleviate (or resolve) a problem of low receiving efficiency of a lidar caused by the walk-off effect while reducing hardware costs and a product size.

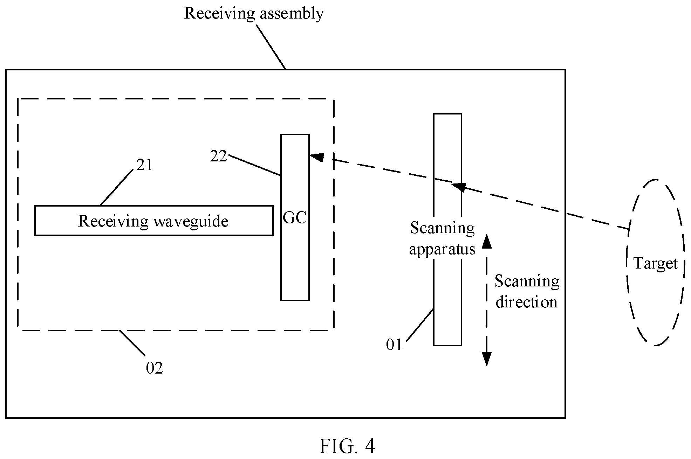

FIG. 4 is a diagram of a structure of a receiving assembly according to an embodiment of this application. The receiving assembly may be used in a lidar. The receiving assembly includes a scanning apparatus 01 and at least one receiving channel 02. Received light enters the receiving channel 02 after being reflected by a surface of the scanning apparatus. It may be understood that FIG. 4 shows only one receiving channel 02, which is not actually limited thereto.

As shown in FIG. 4, each receiving channel 02 includes at least one receiving waveguide 21 and at least one grating coupler (grating coupler, GC) 22. A quantity of receiving waveguides 21 may be the same as a quantity of grating couplers 22. Receiving waveguides 21 correspond one-to-one to grating couplers 22. Each grating coupler 22 is configured to couple, into a receiving waveguide 21 corresponding to the grating coupler 22, the received light reflected by the scanning apparatus 01.

It may be understood that the received light may pass through a receiving optical system and then arrive at the grating coupler 22. For example, the grating coupler 22 may be specifically configured to couple, into the receiving waveguide 21 corresponding to the grating coupler 22, the received light that is reflected by the scanning apparatus 01 and that passes through the receiving optical system.

It may be understood that FIG. 4 shows only one receiving waveguide 21 and one grating coupler 22, which is not actually limited thereto.

It may be understood that a working principle of the grating coupler 22 is mainly based on a diffraction effect of a grating on light. When incident light enters the grating coupler 22, diffraction occurs due to the variation in a refractive index of the grating within the grating coupler 22, which gives rise to interference of light. Through such interference, the grating coupler 22 may couple a part of the incident light into the receiving waveguide 21.

In this embodiment of this application, the receiving assembly of the lidar includes a combination of the grating coupler 22 and the receiving waveguide 21, and the grating coupler 22 couples the received light into the receiving waveguide 21. Compared with an edge coupler, in terms of a manufacturing process, the grating coupler 22 allows a physical size of a receiving surface to be increased along an offset direction of a walk-off effect. Based on this, a structure of a grating layer of the grating coupler 22 may be further designed, so that a mode field of the grating coupler 22 may increase at least in the offset direction of the walk-off effect. Therefore, even after the received light is offset due to the walk-off effect, it can still be received by the grating coupler 22 and then coupled into the receiving waveguide 21, thereby alleviating (or resolving) a problem of low receiving efficiency of the lidar caused by the walk-off effect.

In addition, in this embodiment of this application, a quantity of waveguides may be reduced. For example, one receiving channel may have as few as one receiving waveguide 21 and one grating coupler 22, without the need for an additional optical rotating system. This can improve receiving efficiency of the lidar while reducing hardware costs and a product size of the lidar.

In addition, the grating coupler 22 can be flexibly disposed. For example, the grating coupler 22 may be disposed at any position in a lidar chip, which can minimize unnecessary waveguide crossings and reduce inter-waveguide crosstalk, thereby improving overall receiving performance of the lidar.

It may be understood that the received light being "received" by the grating coupler 22 described in this specification means that the received light is "effectively received" by the grating coupler 22. For example, the received light is "received and coupled into the receiving waveguide 21" by the grating coupler 22, and finally may be received by a lidar detector. In some embodiments, "receiving" in this specification may also be described as "coupling", and "receiving efficiency" in this specification may also be described as "coupling efficiency". For example, receiving efficiency of the grating coupler 22 may also be referred to as coupling efficiency of the grating coupler 22, and may be understood as a ratio of light output (or received) by the grating coupler 22 to light input to the grating coupler 22, and is used to describe an effect (or a coupling effect) of the grating coupler 22 for the received light.

It may be understood that the mode field of the grating coupler 22 described in this specification refers to a part that is of the grating coupler 22 and that can receive and transmit light. Only received light that is incident on a mode field of a first grating layer 221 can be received by the first grating layer 221 and coupled into the receiving waveguide 21. In some embodiments, the mode field of the grating coupler 22 may also be referred to as a spatial mode field of the grating coupler 22, a mode spot of the grating coupler 22, a receiving surface or a photosensitive surface of the grating coupler 22, or the like.

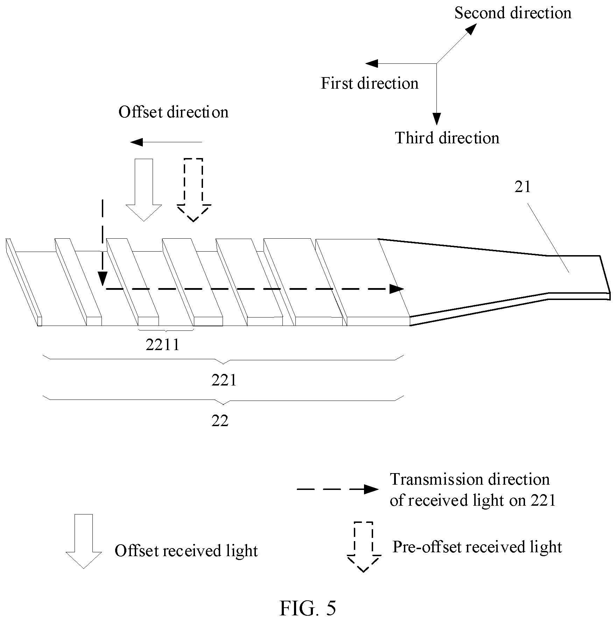

In a possible design, as shown in FIG. 5, the grating coupler 22 may include the first grating layer 221, the first grating layer 221 includes a plurality of grating units 2211 arranged along a first direction, and the plurality of grating units 2211 form a grating structure of the grating coupler 22. When light is incident on the first grating layer 221 along a third direction, the first grating layer 221 may couple the light into the receiving waveguide 21 along a thickness direction of the first grating layer 221.

The grating unit 2211 includes a transparent part and an opaque part. In FIG. 5, an example in which a protrusion is the transparent part and a groove between two adjacent protrusions is the opaque part is used. As shown in FIG. 5, protrusions and grooves alternate on the first grating layer 221, where one protrusion and a groove adjacent to the protrusion (on either side) form a grating period.

In some embodiments, each grating unit 2211 may include a protrusion and a groove adjacent to the protrusion (on either side), that is, each grating unit 2211 may include a grating period (as shown in FIG. 5). In some other embodiments, each grating unit 2211 may include a plurality of protrusions and a groove adjacent to each of the plurality of protrusions, that is, each grating unit 2211 may include a plurality of grating periods (not shown in FIG. 5). For ease of description, the following uses an example in which one grating unit 2211 includes one grating period for description.

A duty cycle of each of the plurality of grating units 2211 is within a first range. The duty cycle is a ratio of a transparent part of the grating unit 2211 to the entirety of the grating unit 2211, for example, a ratio of protrusions in the grating unit 2211 to the entirety of the grating unit 2211. When the duty cycle of the grating unit 2211 is within the first range, the grating unit 2211 may receive and transmit light, or coupling efficiency of the grating unit 2211 exceeds a threshold (for example, exceeds 0).

It can be understood that the grating units 2211 whose duty cycles are within the first range form the mode field of the first grating layer 221, namely, a part that is of the first grating layer 221 and that can receive and transmit light, and only received light that is incident on the mode field of the first grating layer 221 can be received and transmitted by the first grating layer 221 (for example, coupled into the receiving waveguide 21). It may be understood that, in the grating coupler 22, a grating layer is a main part that couples light. Therefore, in some cases, the mode field of the first grating layer 221 may be equivalent to the mode field of the grating coupler 22.

In a possible example, the first range is a range in which the duty cycle is greater than 0% and less than 100%, and may be represented as (0%, 100%). Certainly, the foregoing cases are merely examples, and an actual application is not limited thereto. For example, the first range may alternatively be (1%, 99%), (5%, 95%), or the like.

In some embodiments, there is an association relationship between the duty cycle of the grating unit 2211 and the grating period of the grating unit 2211. When the duty cycle of the grating unit 2211 is within the first range, the grating period of the grating unit 2211 is within a second range.

For example, the association relationship may be: ${n}_{eff} - mλ / P = sin θ .$

P indicates the grating period; n_{eff} indicates an effective refractive index of the grating and is related to the duty cycle; λ indicates an optical wavelength; θ indicates an included angle between an emitting/receiving direction and the normal; and m indicates the order.

Therefore, the duty cycle of each of the plurality of grating units 2211 being within the first range may be alternatively described as that the grating period of each of the plurality of grating units 2211 is within the second range; or that the duty cycle of each of the plurality of grating units 2211 is within the first range, and the grating period of each of the plurality of grating units 2211 is within the second range.

It may be understood that duty cycles (or grating periods) of grating units 2211 at different positions in the first grating layer 221 may be the same, or may be variable (that is, different). This is not limited in embodiments of this application. When duty cycles of grating units 2211 at different positions in the first grating layer 221 are variable, the variation may be regular or irregular. For example, in FIG. 5, an example in which the duty cycle of the grating unit 2211 increases along the thickness direction of the first grating layer 221 is used, where a duty cycle of a grating unit 2211 closest to the receiving waveguide 21 is the highest, and a duty cycle of a grating unit 2211 farthest from the receiving waveguide 21 is the lowest. In an actual application, a design of the duty cycle (or the grating period) of the grating unit 2211 in the first grating layer 221 is not limited to the design manner shown in FIG. 5. For example, a duty cycle of a grating unit 2211 closest to the receiving waveguide 21 may be the lowest, and a duty cycle of a grating unit 2211 farthest from the receiving waveguide 21 may be the highest.

A total length of the plurality of grating units 2211 in the first direction is greater than a first length. The first direction corresponds to the offset direction of the walk-off effect generated by the scanning apparatus 01, or the first direction corresponds to a scanning direction generated by the scanning apparatus 01.

In an example, the first direction is the offset direction of the walk-off effect generated by the scanning apparatus 01, and the first direction is parallel to the offset direction of the walk-off effect generated by the scanning apparatus 01, or the first direction is substantially parallel to the offset direction of the walk-off effect generated by the scanning apparatus 01 (for example, an included angle between the first direction and the offset direction is less than a preset value). It may be understood that the offset direction in FIG. 5 is illustrated by taking a direction from the receiving waveguide 21 to the grating unit 2211 as an example, and is not actually limited thereto, for example, the offset direction may alternatively be a direction from the grating unit 2211 to the receiving waveguide 21, or another direction. FIG. 5 is illustrated by an example in which the first direction is parallel to the offset direction of the walk-off effect generated by the scanning apparatus 01, and is not actually limited thereto.

It can be understood that the walk-off effect is caused by rotation of the scanning apparatus 01. Therefore, the offset direction of the walk-off effect corresponds to the scanning direction of the scanning apparatus 01. For example, the offset direction of the walk-off effect is parallel to the scanning direction of the scanning apparatus 01. Certainly, the correspondence between the offset direction of the walk-off effect and the scanning direction of the scanning apparatus 01 may alternatively be another relationship. For example, when an optical rotating system rotates the offset direction of the walk-off effect into a direction perpendicular to the scanning direction of the scanning apparatus 01, the offset direction of the walk-off effect is perpendicular to the scanning direction of the scanning apparatus 01. For ease of description, in this specification, an example in which the offset direction of the walk-off effect is parallel to the scanning direction of the scanning apparatus 01 is used.

Because the total length of the plurality of grating units 2211 in the first direction is greater than the first length, the duty cycle of each of the plurality of grating units 2211 is within the first range, and the grating units 2211 whose duty cycles are within the first range form the mode field of the first grating layer 221 (or the grating coupler 22), a length of the mode field of the first grating layer 221 (or the grating coupler 22) in the first direction is greater than the first length.

In some embodiments, the first length may be related to a maximum offset corresponding to the walk-off effect generated by the scanning apparatus 01. An offset corresponding to the walk-off effect is an offset of a receiving position of the received light in the mode field of the first grating layer 221 (or the grating coupler 22). For example, the first length is *a+b*, where *a* represents a length of a spatial mode field (namely, a spatial area in which the received light is located, which may be referred to as a mode field, a light mode spot, a light spot, or the like) of the received light in the first direction, and *b* represents the maximum offset corresponding to the walk-off effect.

According to the foregoing design, a length of the mode field of the grating coupler 22 in the offset direction of the walk-off effect generated by the scanning apparatus 01 may be greater than the first length, so that the received light can still be located in the mode field of the grating coupler 22 after being offset due to the walk-off effect, thereby improving receiving efficiency of the receiving assembly.

In a possible design, a total length of a plurality of grating units 2211 in a first direction is greater than a first length, a total length of the plurality of grating units 2211 in a second direction is less than the first length, and the second direction is different from the first direction. For example, the second direction is perpendicular to the first direction. Alternatively, a length of a mode field of a grating coupler 22 in the second direction is less than the first length.

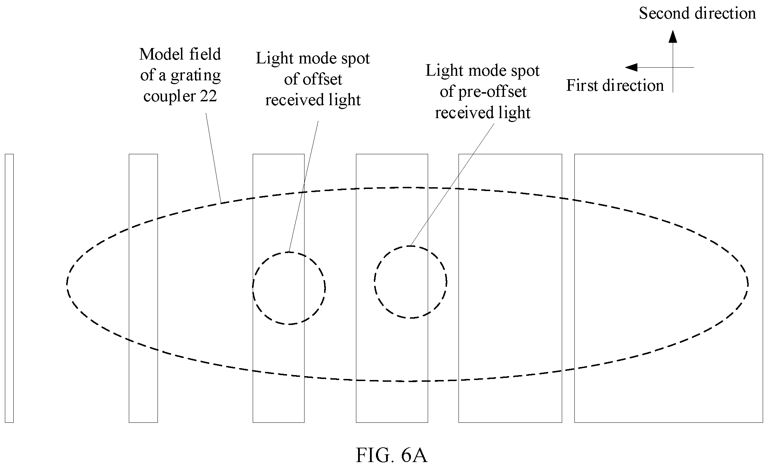

In an example, FIG. 6A is a top view of a first grating layer 221. FIG. 6A shows a shape of the mode field of the first grating layer 221 (or the grating coupler 22) when the total length of the plurality of grating units 2211 in the second direction is less than the first length. In this example, the mode field of the first grating layer 221 (or the grating coupler 22) is an ellipse, where a major axis direction of the mode field is the first direction, and a minor axis direction of the mode field is the second direction.

It may be understood that the elliptical mode field shown in FIG. 6A is merely an example. In an actual case, the mode field of the first grating layer 221 (or the grating coupler 22) may alternatively be a rectangle, a trapezoid, or another irregular shape. This is not limited in embodiments of this application.

In this way, the mode field of the first grating layer 221 (or the grating coupler 22) may be increased in an offset direction of the walk-off effect, but may not be increased in the second direction, thereby minimizing a size of the grating coupler 22 while improving receiving efficiency of the first grating layer 221 (or the grating coupler 22).

Optionally, a size of the mode field of the first grating layer 221 (or the grating coupler 22) in the second direction may match a spatial mode field of received light in the second direction. In this way, receiving efficiency of the first grating layer 221 (or the grating coupler 22) may be further improved.

In another possible design, a total length of a plurality of grating units 2211 in a first direction is greater than a first length, a total length of the plurality of grating units 2211 in a second direction is equal to (or approximately equal to) the total length of the plurality of grating units 2211 in the first direction, and the second direction is perpendicular to the first direction. Alternatively, a length of a mode field of a grating coupler 22 in the second direction is equal to (or approximately equal to) a length of a mode field of the grating coupler 22 in the first direction.

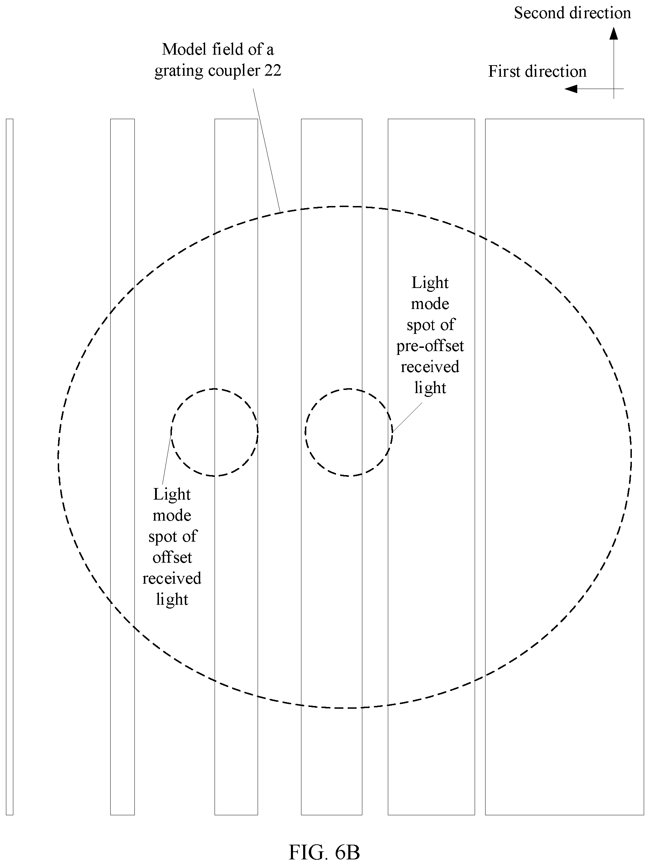

In an example, FIG. 6B shows a shape of a mode field of a first grating layer 221 (or the grating coupler 22) when the total length of the plurality of grating units 2211 in the second direction is equal to the first length. In this example, the shape of the mode field is a circle.

It may be understood that the circular mode field shown in FIG. 6B is merely an example. In an actual case, the mode field of the first grating layer 221 (or the grating coupler 22) may alternatively be a square, a rhombus, or another shape. This is not limited in embodiments of this application.

In this way, the mode field of the first grating layer 221 (or the grating coupler 22) may be increased in a plurality of directions (including an offset direction of the walk-off effect), thereby further improving receiving efficiency of the first grating layer 221 (or the grating coupler 22).

In a possible design, a first grating unit 2211 in a plurality of grating units 2211 is offset relative to a center of the plurality of grating units 2211, and a direction in which the first grating unit 2211 is offset relative to the center is the same as an offset direction of the walk-off effect generated by a scanning apparatus 01. In other words, the first grating unit 2211 is offset relative to the center of the plurality of grating units 2211 in a first direction.

Receiving efficiency (or coupling efficiency) of the first grating unit 2211 is a maximum value among receiving efficiency values of the plurality of grating units 2211. For example, when a duty cycle of the first grating unit 2211 is a first value and/or a grating period of the first grating unit 2211 is a second value, receiving efficiency of the first grating unit 2211 is the maximum value among the receiving efficiency values of the plurality of grating units 2211. The first value and/or the second value need/needs to be determined based on an actual situation. For example, the first value may be 50% (that is, receiving efficiency is the highest when a duty cycle is 50%). This is not limited in this application.

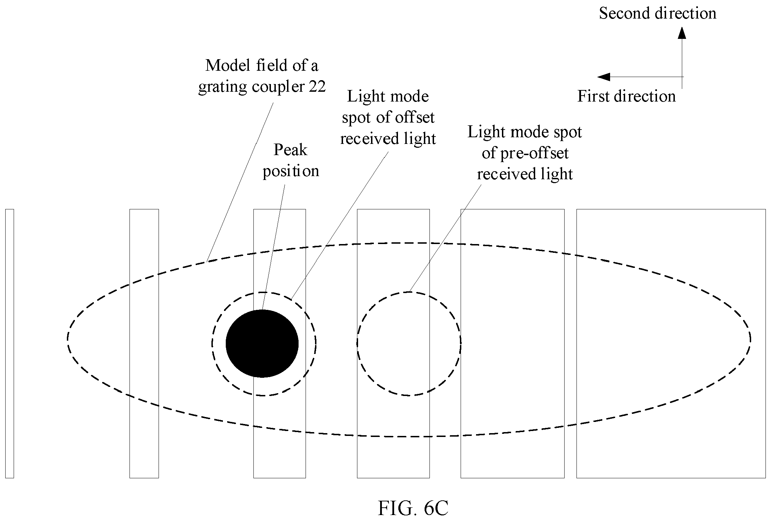

In this way, a mode field of a first grating layer 221 (or a grating coupler 22) may be a mode field whose peak value is biased to one side, and receiving efficiency of the offset received light by the first grating layer 221 (or the grating coupler 22) may be improved. For example, FIG. 6C shows a case in which the (receiving efficiency) peak value of the mode field of the first grating layer 221 (or the grating coupler 22) is biased to one side, and the receiving efficiency of the offset received light is higher than receiving efficiency of pre-offset (or non-offset) received light. It may be understood that an elliptic mode field is used as an example in FIG. 6C. In an actual case, the mode field of the first grating layer 221 (or the grating coupler 22) may alternatively be a rectangle, a square, a circle, a rhombus, or another shape. This is not limited in embodiments of this application. In FIG. 6C, an example in which an area of a peak region is less than an area of a light mode spot of received light is used, and this application is not limited thereto.

Optionally, an offset of the first grating unit 2211 relative to the center is related to a maximum offset corresponding to the walk-off effect generated by a scanning apparatus 01. For example, the offset of the first grating unit 2211 relative to the center is equal to the maximum offset corresponding to the walk-off effect generated by the scanning apparatus 01. In this way, when the walk-off effect is the most serious (that is, when an offset corresponding to the walk-off effect is the maximum), the position of the received light is exactly a peak position, and the first grating layer 221 (or the grating coupler 22) has the highest receiving efficiency of the received light.

In a possible design, a first grating unit 2211 in a plurality of grating units 2211 is disposed in a center of the plurality of grating units 2211, where a duty cycle of the first grating unit 2211 is a first value, and a grating period of the first grating unit 2211 is a second value. Receiving efficiency (or coupling efficiency) of the first grating unit 2211 is a maximum value among receiving efficiency values of the plurality of grating units 2211. For example, when the duty cycle of the first grating unit 2211 is the first value and/or the grating period of the first grating unit 2211 is the second value, receiving efficiency of the first grating unit 2211 is the maximum value among the receiving efficiency values of the plurality of grating units 2211.

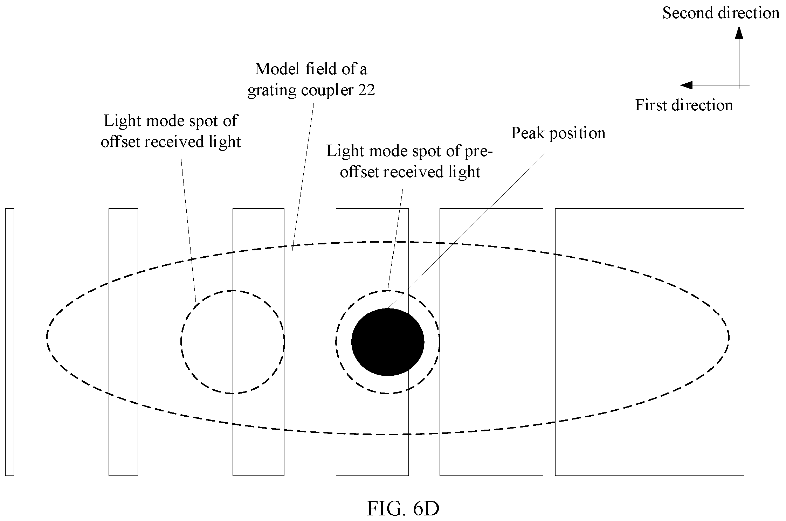

In this way, a mode field of a first grating layer 221 (or a grating coupler 22) is a mode field whose peak value is in the center, and receiving efficiency at a position of the pre-offset received light is higher. For example, FIG. 6D shows a case in which the (receiving efficiency) peak value of the mode field of the first grating layer 221 (or the grating coupler 22) is in the center of the mode field, and pre-offset received light is just at the peak position, and receiving efficiency is the highest. It may be understood that an elliptic mode field is used as an example in FIG. 6D. In an actual case, the mode field of the first grating layer 221 (or the grating coupler 22) may alternatively be a rectangle, a square, a circle, a rhombus, or another shape. This is not limited in embodiments of this application. In FIG. 6D, an example in which an area of a peak region is less than an area of a light mode spot of received light is used, and this application is not limited thereto.

In another possible design, a mode field of a first grating layer 221 (or a grating coupler 22) may be further designed as a Gaussian spot mode field or a Gaussian-like spot mode field, that is, receiving efficiency of the mode field decreases from a peak position in the mode field to a surrounding direction.

In an example, in a first direction, it may be set that the receiving efficiency of the mode field decreases sequentially from the peak position in the mode field and along the first direction and a reverse direction of the first direction. For example, receiving efficiency (or coupling efficiency) of each grating unit 2211 in a plurality of grating units 2211 decreases sequentially along a direction from the first grating unit 2211 to a second grating unit 2211, and the second grating unit 2211 is the 1^{st} grating unit 2211 and/or the last grating unit 2211 in the plurality of grating units 2211 in the first direction. In a specific implementation, for example, a duty cycle of each grating unit 2211 in the plurality of grating units 2211 may be set to increase or decrease sequentially along the direction from the first grating unit 2211 to the second grating unit 2211.

In an example, in a second direction, it may be set that the receiving efficiency of the mode field decreases sequentially from the peak position in the mode field and along the second direction and a reverse direction of the second direction. For example, it may be set that a refractive index of each grating unit 2211 in the plurality of grating units 2211 decreases sequentially in the second direction and in the reverse direction of the second direction. In a specific implementation, for example, the grating unit 2211 uses materials or structures with different refractive indexes at different positions in the second direction.

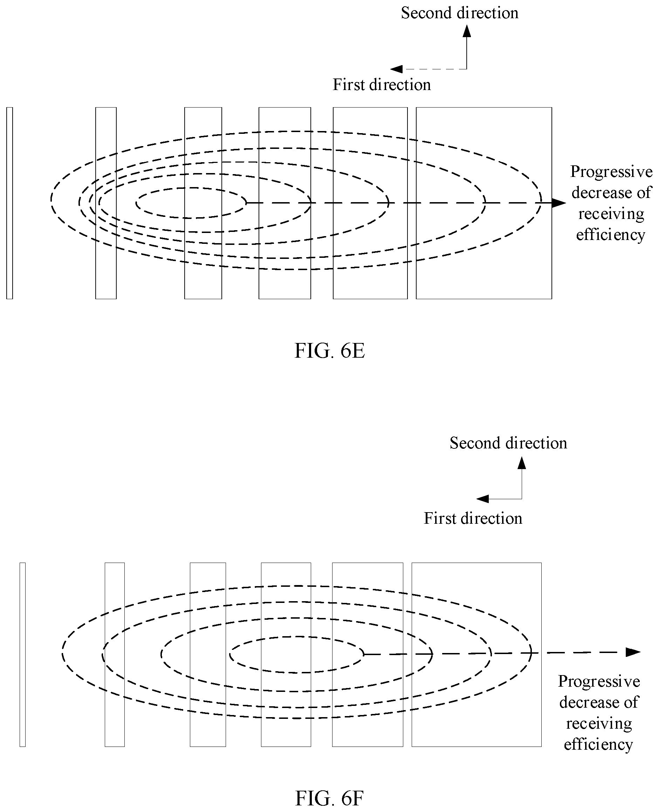

In an example, FIG. 6E shows a Gaussian-like spot mode field whose peak value is biased to one side. In another example, FIG. 6F shows a Gaussian-like spot mode field whose peak value is in the center. It may be understood that an elliptic mode field is used as an example in FIG. 6E and FIG. 6F. In an actual case, the mode field of the first grating layer 221 (or the grating coupler 22) may alternatively be a rectangle, a square, a circle, a rhombus, or another shape. This is not limited in embodiments of this application.

According to the foregoing design, when a light spot of the received light is a Gaussian spot or a Gaussian-like spot, mode field distribution of the first grating layer 221 (or the grating coupler 22) matches energy distribution of the light spot of the received light, which may further improve receiving efficiency of the first grating layer 221 (or the grating coupler 22).

It may be understood that, in the examples provided in FIG. 6A to FIG. 6F, the light mode spot of the received light is a circle, which is actually not limited thereto, and may alternatively be any other shape.

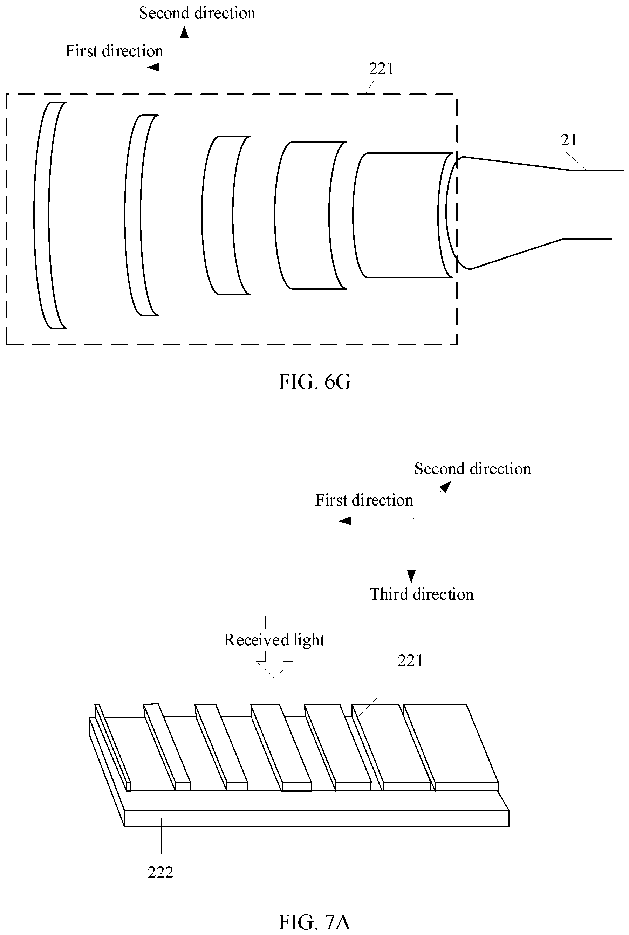

It may be understood that, in examples such as FIG. 5 and FIG. 6A to FIG. 6F, a grating of the grating coupler 22 (or the first grating layer 221) is a straight grating, for example, a protrusion and a groove are both straight stripes (or rectangles). In an actual case, the grating is not limited to a straight grating, and may alternatively be a curved grating. As shown in FIG. 6G, the protrusion and the groove are arc stripes. In addition, sizes of different grating units 2211 in the second direction may be the same, or may be different. This is not limited in embodiments of this application.

In a possible design, a grating coupler 22 may be of a multi-layer structure.

In an example, as shown in FIG. 7A, the grating coupler 22 further includes a reflection layer 222. A first grating layer 221 and the reflection layer 222 are sequentially provided in a laminated manner along a third direction, where the third direction is an incident direction of received light on the grating coupler 22. The reflection layer 222 is configured to reflect light transmitted from the first grating layer 221 to the reflection layer 222, so as to improve coupling efficiency of the first grating layer 221.

In a specific implementation, the reflection layer 222 may be a distributed Bragg reflector (distributed Bragg reflector, DBR) layer, a metal layer, or the like. This is not limited.

In this example, the reflection layer 222 is provided under the first grating layer 221, so that receiving efficiency of the grating coupler 22 can be further improved.

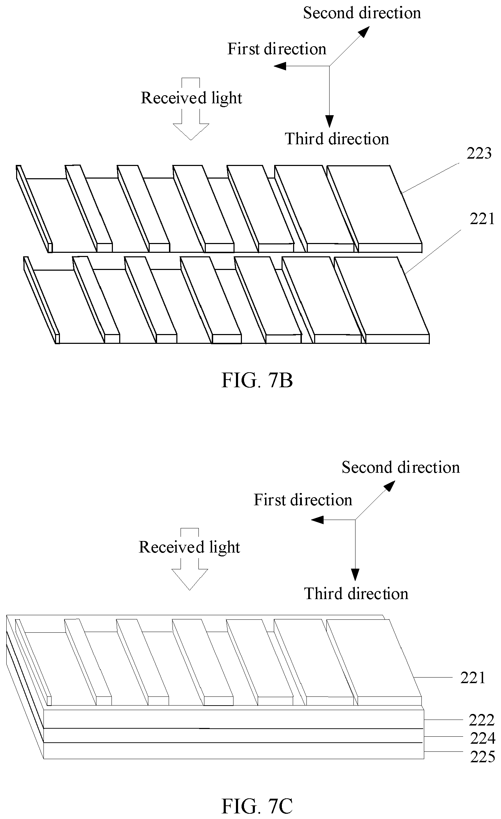

In an example, as shown in FIG. 7B, the grating coupler 22 further includes a second grating layer 223. FIG. 7B is an example in which the second grating layer 223 is provided on the first grating layer 221, which is not actually limited thereto. The second grating layer 223 may alternatively be provided under the first grating layer 221. A structure of the second grating layer 223 may be the same as or different from a structure of the first grating layer 221. This is not limited in embodiments of this application. In this case, a mode field of the grating coupler 22 is a combination of a mode field of the first grating layer 221 and a mode field of the second grating layer 223.

It may be understood that two layers of gratings are used as an example in FIG. 7B. Actually, more grating layers may be provided in the grating coupler 22. This is not limited in embodiments of this application. In addition, in FIG. 7B, in order to clearly show a spatial position relationship between the first grating layer 221 and the second grating layer 223, a distance between the first grating layer 221 and the second grating layer 223 is exaggerated. Actually, the first grating layer 221 and the second grating layer 223 may have a shorter distance, for example, may be provided in close contact.

In this example, a plurality of layers of gratings are disposed, so that receiving efficiency of the grating coupler 22 can be further improved.

In an example, the grating coupler 22 may further include a buried oxide (Buried Oxide, BOX) layer 224 and a substrate 225. FIG. 7C shows a possible structure of the grating coupler 22, including the first grating layer 221, a BOX layer, a reflection layer, and a substrate that are sequentially disposed in a laminated manner along the third direction. The substrate 225 may play a role of supporting other layers (such as the first grating layer 221, the BOX layer, and the reflection layer) in the grating coupler 22. The BOX layer 224 is configured to separate the substrate layer 225 from another layer, so as to prevent light of the another layer from leaking to the substrate layer 225. In some embodiments, the substrate layer 225 may be specifically a silicon substrate.

It may be understood that FIG. 7A and FIG. 7B are merely some examples of a layer structure of the grating coupler 22, and an actual layer structure of the grating coupler 22 is not limited thereto.

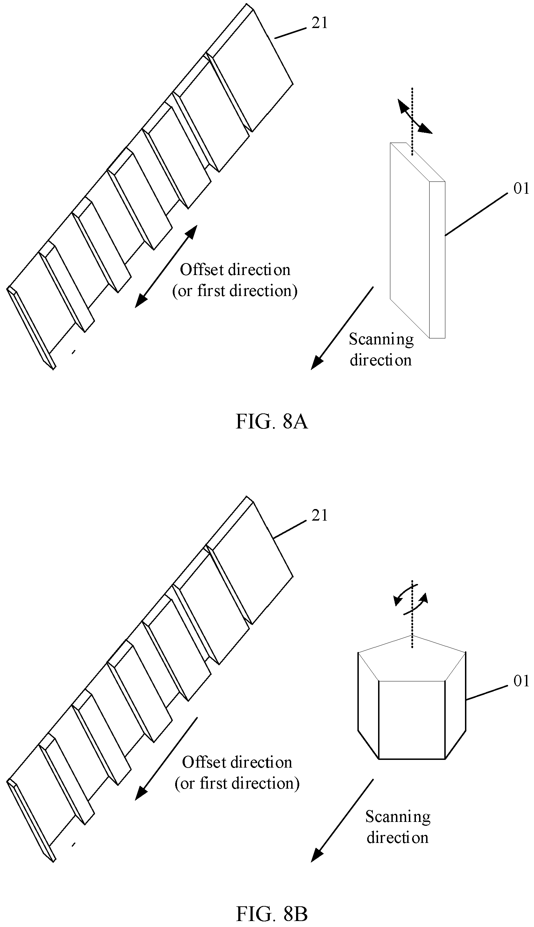

In a possible design, a scanning apparatus 01 may be a one-dimensional (1D) scanning apparatus, and an offset direction (or a first direction) of the walk-off effect generated by the scanning apparatus 01 corresponds to a scanning direction of the scanning apparatus 01. For example, as shown in FIG. 8A and FIG. 8B, the scanning apparatus 01 shown in FIG. 8A uses a 1D scanning mirror as an example, and the scanning apparatus 01 shown in FIG. 8B uses a 1D rotating mirror as an example. It may be understood that FIG. 8A shows an example in which the scanning apparatus 01 is a 1D scanning mirror whose scanning manner is swinging back and forth. Therefore, there may be two scanning directions. Correspondingly, an offset direction may correspond to either of the two scanning directions, or may correspond to both of the two scanning directions. The scanning apparatus 01 in FIG. 8B is a 1D rotating mirror whose scanning manner is 360° rotation and swing. Therefore, there may be only one scanning direction, and correspondingly, there is only one offset direction. In an actual application, in addition to the 1D scanning mirror and the 1D rotating mirror, the scanning apparatus 01 may alternatively be implemented in another manner, for example, may be an MEMS scanning mirror or a Galvo scanning mirror. This is not limited.

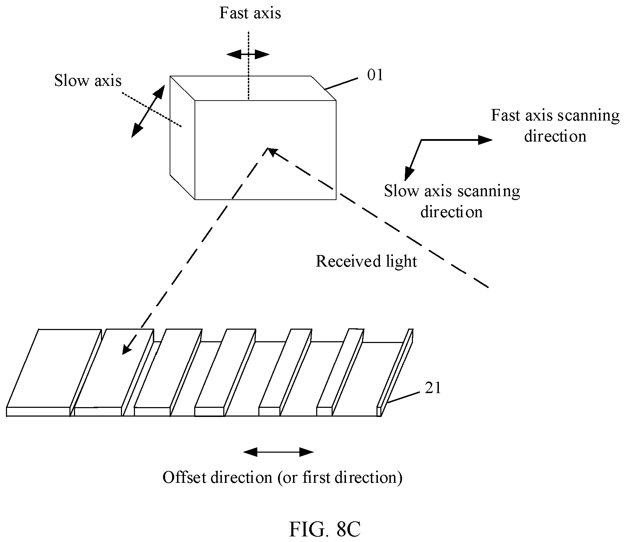

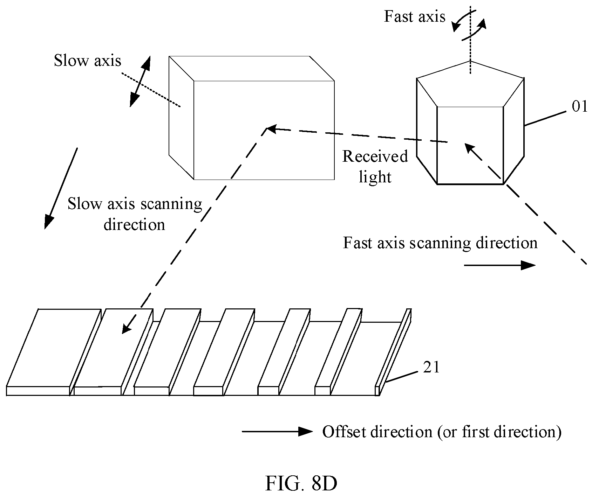

In another possible design, a scanning apparatus 01 is a two-dimensional (2D) scanning apparatus, and an offset direction (or a first direction) of the walk-off effect generated by the scanning apparatus 01 corresponds to a scanning direction of a fast axis in the two-dimensional scanning apparatus 01. For example, as shown in FIG. 8C and FIG. 8D, the scanning apparatus 01 shown in FIG. 8C uses a 2D scanning mirror as an example, and the scanning apparatus 01 shown in FIG. 8D uses a 1D rotating mirror and a 1D scanning mirror as an example. In an actual application, the 2D scanning apparatus 01 may alternatively be implemented in another manner, which is not limited.

Based on a same technical concept, an embodiment of this application further provides a lidar. The lidar includes the foregoing receiving assembly, and further includes an emitting assembly. The emitting assembly and the receiving assembly share a scanning apparatus 01.

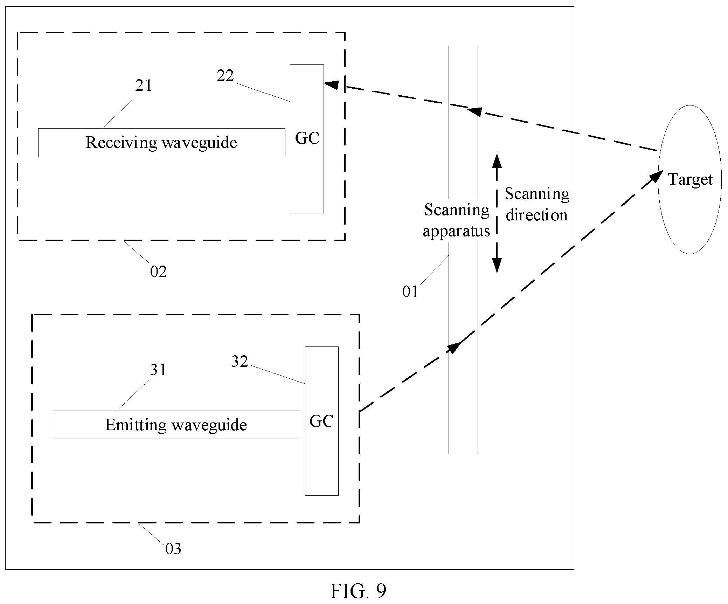

In a possible design, as shown in FIG. 9, the emitting assembly may include an emitting waveguide 31 and a grating coupler 32. A structure parameter of a grating layer in the grating coupler 32 in the emitting assembly corresponds to (for example, is the same as) a structure parameter of a grating layer in a grating coupler 22 in the receiving assembly. The structure parameter includes but is not limited to one or more of a structure, a shape, a size, a grating period, a duty cycle, and the like. In this way, receiving efficiency of the lidar is further improved.

Based on a same technical concept, an embodiment of this application further provides a terminal. The terminal includes the foregoing receiving assembly or lidar. The terminal includes but is not limited to a smart home device, for example, a television, a robotic vacuum cleaner, a smart lamp, a speaker system, an intelligent lighting system, an electric appliance control system, home background music, a home theater system, an intercom system, and video surveillance, an intelligent transportation device, for example, a vehicle, a ship, an uncrewed aerial vehicle, a train, a van, a wagon, and a truck, and an intelligent manufacturing device, for example, a robot, an industrial device, intelligent logistics, and an intelligent factory. Alternatively, the terminal device may be a computer device with a laser detection capability, for example, a desktop computer, a personal computer, or a server. It should be further understood that the terminal device may alternatively be a portable electronic device with a laser detection capability, for example, a mobile phone, a tablet computer, a palmtop computer, a headset, an acoustic device, a wearable device (for example, a smartwatch), an in-vehicle device, a virtual reality device, or an augmented reality device. The following uses a lidar as an example.

It may be understood that, "a plurality of" in embodiments of this application means two or more than two. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. In addition, it should be understood that although the terms such as first and second may be used in embodiments of the present invention to describe objects, these objects are not limited by these terms. These terms are merely used for distinguishing the objects from each other.

Terms "including", "having", and any other variant thereof mentioned in descriptions of embodiments of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that, in embodiments of this application, the word "exemplary" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word like "example" or "for example" is intended to present a related concept in a specific manner.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

## Claims

1. A receiving assembly, used in a lidar, wherein the receiving assembly comprises a scanning apparatus and at least one receiving channel;
each of the at least one receiving channel comprises at least one receiving waveguide and at least one grating coupler, the receiving waveguide corresponds one-to-one to the grating coupler, and each of the at least one grating coupler is configured to couple, into a receiving waveguide corresponding to the grating coupler, received light reflected by the scanning apparatus; and
the grating coupler comprises a first grating layer, the first grating layer comprises a plurality of grating units arranged in a first direction, a duty cycle of each of the plurality of grating units is within a first range, a total length of the plurality of grating units in the first direction is greater than a first length, and the first direction corresponds to a scanning direction of the scanning apparatus.

2. The receiving assembly according to claim 1, wherein a grating period of each of the plurality of grating units is within a second range.

3. The receiving assembly according to claim 1 or 2, wherein a length of a mode field of the grating coupler in the first direction is greater than the first length.

4. The receiving assembly according to any one of claims 1 to 3, wherein the first length is related to a maximum offset corresponding to a walk-off effect generated by the scanning apparatus.

5. The receiving assembly according to any one of claims 1 to 4, wherein
the scanning apparatus is a two-dimensional scanning apparatus, and the first direction corresponds to a scanning direction of a fast axis in the two-dimensional scanning apparatus.

6. The receiving assembly according to any one of claims 1 to 5, wherein a total length of the plurality of grating units in a second direction is less than the first length, and the second direction is perpendicular to the first direction.

7. The receiving assembly according to claim 6, wherein a length of the mode field of the grating coupler in the second direction is less than the first length.

8. The receiving assembly according to any one of claims 1 to 5, wherein a total length of the plurality of grating units in a second direction is equal to the total length of the plurality of grating units in the first direction, and the second direction is perpendicular to the first direction.

9. The receiving assembly according to claim 8, wherein a length of the mode field of the grating coupler in the second direction is equal to the length of the mode field of the grating coupler in the first direction.

10. The receiving assembly according to any one of claims 1 to 9, wherein a first grating unit in the plurality of grating units is offset relative to a center of the plurality of grating units, and a direction in which the first grating unit is offset relative to the center is the same as an offset direction of the walk-off effect generated by the scanning apparatus; and
a duty cycle of the first grating unit is a first value, and a grating period of the first grating unit is a second value.

11. The receiving assembly according to claim 10, wherein an offset of the first grating unit relative to the center is related to the maximum offset corresponding to the walk-off effect generated by the scanning apparatus.

12. The receiving assembly according to any one of claims 1 to 9, wherein a first grating unit in the plurality of grating units is located in a center of the plurality of grating units, a duty cycle of the first grating unit is a first value, and a grating period of the first grating unit is a second value.

13. The receiving assembly according to any one of claims 10 to 12, wherein coupling efficiency of the first grating unit is a maximum value among coupling efficiency values of the plurality of grating units.

14. The receiving assembly according to any one of claims 10 to 13, wherein
the duty cycle of each of the plurality of grating units increases or decreases along a direction from the first grating unit to a second grating unit; or the coupling efficiency of each of the plurality of grating units decreases along a direction from the first grating unit to a second grating unit; and
the second grating unit is the 1^{st} grating unit or the last grating unit in the plurality of grating units in the first direction.

15. The receiving assembly according to any one of claims 1 to 14, wherein the grating coupler further comprises a second grating layer provided above or below the first grating layer.

16. The receiving assembly according to any one of claims 1 to 15, wherein the grating coupler further comprises a reflection layer provided below the first grating layer, and the reflection layer is a distributed Bragg reflector DBR layer or a metal layer.

17. A lidar, wherein the lidar comprises the receiving assembly according to any one of claims 1 to 16, the lidar further comprises an emitting assembly, and the emitting assembly and the receiving assembly share the scanning apparatus.

18. The lidar according to claim 17, wherein the emitting assembly comprises an emitting waveguide and a grating coupler, a structure parameter of a grating layer in the grating coupler in the emitting assembly corresponds to a structure parameter of a grating layer in a grating coupler in the receiving assembly, and the structure parameter comprises one or more of a shape, a size, a grating period, and a duty cycle.
